# EUROPÄISCHE PATENTSCHRIFT

(11) **EP 3 123 041 B1**
(45) Veröffentlichungstag und Bekanntmachung des Hinweises auf die Patenterteilung: **09.10.2019**
(21) Anmeldenummer: 15716978.0
(22) Anmeldetag: 12.03.2015
(51) Int. Cl.: F16D 13/38

(54) **ZWISCHENPLATTE FÜR EINE MEHRSCHEIBENKUPPLUNG SOWIE VERFAHREN ZUR HERSTELLUNG EINER ZWISCHENPLATTE**
INTERMEDIATE PLATE FOR A MULTI-DISK CLUTCH AND METHOD FOR PRODUCING AN INTERMEDIATE PLATE
PLATEAU INTERMÉDIAIRE POUR EMBRAYAGE À DISQUES MULTIPLES ET PROCÉDÉ DE FABRICATION D'UN PLATEAU INTERMÉDIAIRE

(30) Priorität: 27.03.2014 DE 102014205773; 18.07.2014 DE 102014214062
(43) Veröffentlichungstag der Anmeldung: 01.02.2017
(73) Patentinhaber: Schaeffler Technologies AG & Co. KG, 91074 Herzogenaurach (DE)
(72) Erfinder: REIMNITZ, Dirk, 77815 Bühl (DE); BAUMANN, Michael, 77886 Lauf (DE); DECKER, Günter, 77836 Rheinmünster (DE)
(86) Internationale Anmeldenummer: PCT/DE2015/200154
(87) Internationale Veröffentlichungsnummer: WO 2015/144163

(56) Entgegenhaltungen:
- WO-A1-03/081065
- DE-A1- 3 707 918

## Beschreibung

Die Erfindung betrifft eine Zwischenplatte für eine Mehrscheibenkupplung sowie ein Verfahren zur Herstellung einer derartigen Zwischenplatte, die zwischen einer Gegenplatte und einer relativ zur Gegenplatte verlagerbaren Anpressplatte verpresst werden kann, um dadurch die Anzahl der Reibkontakte und die Größe der gesamten Reibfläche der Mehrscheibenkupplung zu erhöhen, um mit Hilfe der Mehrscheibenkupplung ein entsprechend hohes Drehmoment übertragen zu können.

Trockene Doppelkupplung verfügen nach derzeitigem Stand der Technik meist über eine Scheibe je Teilkupplung. Diese Scheiben besitzen je zwei Reibflächen mit denen sie an ihren Nachbarbauteilen (z.B. Anpressplatte und Zentralpatte oder Gegenplatte) anliegen, wenn sie zur Momentenübertragung von der Kupplung eingespannt werden, und bilden so mit der Kupplung zwei Reibstellen aus. Das übertragbare Moment einer Kupplung lässt sich auch bei gleicher Anpresskraft, gleichem Durchmesser und gleichen Reibverhältnissen (Reibwert) steigern, indem man die Anzahl der Reibstellen erhöht. Dieses Prinzip wird häufig bei Lamellenkupplungen eingesetzt, wie sie beispielsweise auch bei nasslaufenden Doppelkupplungen verwendet werden. Als trockenlaufende Kupplungen sind Lamellenkupplungen für Fahrzeuganwendungen meist ungeeignet. Ohne Öl, das die Kupplung kühlt, überhitzen die dünnen Lamellen schnell, da sie zu wenig Wärmekapazität aufweisen. Außerdem lüften Lamellenkupplungen meist nicht richtig, wenn die Reibstellen zwischen den Lamellen und den Lamellenträgern nicht durch das Öl geschmiert werden.

Aus DE 10 2011 0185 589 A1 ist eine Zweischeibenkupplung bekannt, bei der eine Anpressplatte und eine Zwischenplatte jeweils über eine Blattfeder mit einer Gegenplatte verbunden sind. Bei einer axialen Verlagerung der Anpressplatte relativ zur Gegenplatte aus einer geöffneten Stellung der Zweischeibenkupplung heraus in eine geschlossene Stellung der Zweischeibenkupplung werden zwischen der Gegenplatte und der Zwischenplatte einerseits und zwischen der Zwischenplatte und der Anpressplatte andererseits vorgesehene Reibbeläge einer Kupplungsscheibe reibschlüssig verpresst.

Aus der WO 03/081065 A1 ist eine Mehrscheibenkupplung bekannt, welche einen Abstandsarm zwischen der Zwischenplatte und einem Blattfederpaket der Anpressplatte aufweist. Dieser an der Zwischenplatte angebrachte Abstandsarm sorgt für eine definierte, angepasste Hubbewegung von Anpressplatte und Zwischenplatte.

Eine weitere Mehrscheibenkupplung ist aus der DE 37 07 918 A1 bekannt.

Es besteht ein ständiges Bedürfnis im Antriebsstrang eines Kraftfahrzeugs mit Hilfe einer Reibungskupplung ein besonders hohes Drehmoment bei unterschiedlichen Bauformen des Antriebsstrangs übertragen zu können.

Es ist die Aufgabe der Erfindung Maßnahmen aufzuzeigen, die eine Übertragung eines besonders hohen Drehmoments bei unterschiedlichen Bauformen eines Antriebsstrangs eines Kraftfahrzeugs mit Hilfe einer Reibungskupplung ermöglichen.

Die Lösung der Aufgabe erfolgt erfindungsgemäß durch eine Mehrscheibenkupplung mit den Merkmalen des Anspruchs 1. Bevorzugte Ausgestaltungen der Erfindung sind in den Unteransprüchen angegeben, die jeweils einzeln oder in Kombination einen Aspekt der Erfindung darstellen können.

Erfindungsgemäß ist eine Zwischenplatte für eine Mehrscheibenkupplung, insbesondere Zweischeibenkupplung, zum Kuppeln einer Antriebswelle eines Kraftfahrzeugmotors mit mindestens einer Getriebeeingangswelle eines Kraftfahrzeuggetriebes, insbesondere für eine Doppelkupplung, vorgesehen mit einem Ringkörper zum reibschlüssigen Verpressen zwischen einer mit der Antriebswelle koppelbaren Gegenplatte und einer relativ zur Gegenplatte axial verlagerbaren Anpressplatte und einer einstückig mit dem Ringkörper ausgebildeten, Kontaktlasche zur wegübersetzten Koppelung des Ringkörpers mit der Anpressplatte, wobei die Kontaktlasche einen durch eine plastische Verformung eines Teils der Kontaktlasche ausgebildeten in axialer Richtung abstehenden Kontaktkörper zum axialen Anschlagen an einer mit einer in axialer Richtung zur Zwischenplatte nachfolgenden Anpressplatte oder weiteren Zwischenplatte verbundenen, insbesondere als Blattfeder ausgestalteten, Rückstellfeder aufweist.

Mit Hilfe der Zwischenplatte ist es möglich für eine Reibungskupplung zwei weitere Reibflächen zum Verpressen von Reibbelägen der zugeordneten Kupplungsscheibe bereitzustellen, so dass sich mit der Zwischenplatte die Anzahl der Reibflächen der jeweiligen Reibungskupplung entsprechend erhöhen lässt. Durch die erhöhte Anzahl der Reibflächen kann ein entsprechend erhöhtes Drehmoment übertragen werden. Zusätzlich oder alternativ kann die auf die jeweilige Anpressplatte aufzubringende Anpresskraft reduziert werden, um ein bestimmtes maximales Drehmoment noch übertragen zu können. Zusätzlich oder alternativ kann der Außenradius der Gegenplatte und/oder der Anpressplatte verringert werden, um ein bestimmtes maximales Drehmoment noch übertragen zu können. Durch den geringeren Außenradius kann das Massenträgheitsmoment der Reibungskupplung reduziert werden und radial Bauraum eingespart werden. Durch das reduzierte Massenträgheitsmoment eignet sich die so ausgebildete Mehrscheibenkupplung insbesondere für Anwendungen mit einem sportlichen und/oder dynamischen Fahrverhalten und/oder zur Reduzierung eines Kraftstoffverbrauchs eines Kraftfahrzeugs. Gleichzeitig kann die Anpresskraft über ein der Anpressplatte zugeordnetes Betätigungselement, beispielsweise ein in der Art einer Tellerfeder ausgestaltetes Hebelelement, in die jeweilige Anpressplatte eingeleitet werden. Dadurch kann sich zwischen einem, insbesondere hydraulischen, Betätigungssystem zur Bereitstellung einer Betätigungskraft und der an dem Reibbelag der Kupplungsscheibe angreifenden Anpresskraft eine Hebelübersetzung ergeben, wodurch sich insbesondere die Betätigungskraft verstärken lässt. Dadurch braucht das Betätigungssystem für eine bestimmte Anpresskraft nur eine entsprechend geringere Betätigungskraft zu erzeugen, die vorzugsweise so gering ist, dass diese Betätigungskraft sogar von der Antriebswelle des Kraftfahrzeugmotors abgestützt werden kann. Dies ermöglicht zusätzliche konstruktive Freiheiten, die beispielsweise für eine verbesserte Montierbarkeit der Mehrscheibenkupplung genutzt werden können. Durch die mit Hilfe des jeweiligen Betätigungselements betätigbare mindestens eine Zwischenplatte aufweisende Teilkupplung kann auch zur Reduzierung der zum Betätigen der Teilkupplung erforderlichen Betätigungskraft die Anzahl der effektiven Reibflächen erhöht werden, so dass bei geringen auftretenden Kräften eine Übertragung von großen Drehmomenten in einem Antriebsstrang eines Kraftfahrzeugs ermöglicht ist.

Die Kontaktlasche kann insbesondere als ein nach radial außen oder nach radial innen abstehender Ansatz ausgebildet sein. Es ist auch möglich, dass die Kontaktlasche in Umfangsrichtung geschlossen ausgestaltet ist und lediglich als eine radiale Verlängerung des Ringkörpers in einen Bereich ausgestaltet ist, in dem kein reibschlüssiges Verpressen stattfindet. Der Ringkörper wird als ein Teil der Zwischenplatte verstanden, der einen Beitrag zu einem reibschlüssigen Verpressen mit einem Teil einer Kupplungsscheibe zwischen der Anpressplatte und der Zwischenplatte einerseits und der Gegenplatte und der Zwischenplatte andererseits leistet. Insbesondere entspricht die radiale Erstreckung des Ringkörpers der radialen Erstreckung von im Reibschluss wirksamen Reibbelägen, die der Ringkörper in axialer Richtung betrachtet überdeckt. Der von der Kontaktlasche ausgebildete Kontaktkörper ist in einem Radialbereich vorgesehen, in dem der Kontaktkörper im eingebauten Zustand an der Rückstellfeder anschlagen kann, die mit der Anpressplatte oder einer weiteren Zwischenplatte verbunden ist. Dadurch ist über den Kontakt des Kontaktkörpers an der Rückstellfeder eine Bewegungskoppelung der Zwischenplatte an die Axialbewegung der Anpressplatte erreicht, ohne dass ein für die Zwischenplatte separates Betätigungselement erforderlich ist. Insbesondere kann der Kontaktkörper bei der Herstellung der Zwischenplatte ausgebildet werden, so dass entsprechend wenige Herstellungsschritte erforderlich sind. Die Zwischenplatte kann dadurch kostengünstig hergestellt werden. Insbesondere ist die Kontaktlasche zusammen mit dem Kontaktkörper einstückig mit dem Ringkörper ausgestaltet, so dass eine besonders geringe Bauteileanzahl erreicht ist. Insbesondere ist es nicht erforderlich den Kontaktkörper durch eine später mit der Zwischenplatte verbundene Nietverbindung auszubilden, so dass eine durch den Nietprozess ungenaue Relativlage des Kontaktkörpers relativ zur Rückstellfeder vermieden werden kann. Ferner ist es leicht möglich durch eine Verwendung unterschiedlicher Matrizen bei der plastischen Verformung der Kontaktlasche unterschiedlich ausgeformte Kontaktkörper vorzusehen, die für unterschiedliche Bauformen eines Antriebsstrangs eines Kraftfahrzeugs verwendet werden können. Vorzugsweise wird für unterschiedliche für unterschiedliche Antriebsstränge vorgesehene Mehrscheibenkupplungen jeweils ein gleichartiger Rohling für die Zwischenplatte verwendet, so dass der Rohling für die Zwischenplatte kostengünstig durch Massenproduktion hergestellt werden kann. Hierbei wird vorzugsweise die selbe Maschine zur plastischen Umformung der Kontaktlasche verwendet, bei der für unterschiedliche Typen an Zwischenplatten lediglich die zur Formgestaltung des Kontaktkörpers vorgesehene Matrize ausgetauscht werden kann. Durch den durch eine plastische Verformung der Kontaktlasche ausgebildeten Kontaktkörper ist mit Hilfe der durch den Ringkörper bereitgestellten zusätzlichen Reibflächen eine Übertragung eines besonders hohen Drehmoments bei unterschiedlichen Bauformen eines Antriebsstrangs eines Kraftfahrzeugs mit Hilfe einer Reibungskupplung ermöglicht.

Die Zwischenplatte kann Teil einer Mehrscheibenkupplung sein. Die Mehrscheibenkupplung wiederum ist insbesondere Teil einer Doppelkupplung, wobei insbesondere beide Reibungskupplungen der Doppelkupplung als Mehrscheibenkupplung ausgestaltet sind. Vorzugsweise werden die Gegenplatten der beiden Reibungskupplungen der Doppelkupplung durch eine gemeinsame Zentralplatte ausgebildet, so dass der axiale Bauraumbedarf der Doppelkupplung reduziert und/oder erforderlicher Bauraum für die Mehrscheibenkupplung(en) geschaffen werden kann. Ferner ist vorzugsweise eine mit der Zwischenplatte verbundene, insbesondere als Blattfeder ausgestaltete, Rückstellfeder zum Verlagern der Zwischenplatte in eine definierte, insbesondere geöffnete, Ausgangsstellung vorgesehen. Die Rückstellfedern sind insbesondere zumindest mittelbar, vorzugsweise über einen mit der Gegenplatte fest verbundenen Kupplungsdeckel, mit der Gegenplatte verbunden. Es ist möglich, dass die Doppelkupplung trotz der zusätzlichen Scheiben und der zusätzlichen Platten der Mehrscheibenkupplungen axial nicht zu lang baut für die üblichen Doppelkupplungsbauräume. Zudem können die Platten (Anpressplatten und Zwischenplatten) auch ohne Ölschmierung ein Lüften aller Scheiben und damit ein schleppmomentfreies Öffnen der Kupplung garantieren. Die Erfindung kann dazu einen auf Blattfedern beruhenden Führungsmechanismus für die Zwischenplatten vorsehen. Das Funktionsprinzip kann auf dem in DE 100 13 857 A1, DE 10 2011 018 589 A1 und DE 10 2011 086 929 A1 beschriebenen Funktionsprinzip basieren, auf deren Inhalt als Teil der Erfindung hiermit Bezug genommen wird, wobei durch die erfindungsgemäße Ausgestaltung verschiedene Konzepte geschaffen werden, mit denen sich die Anforderungen kompakter trockenlaufender Doppelkupplungen erfüllen lassen.

Die Anpressplatte und/oder die Zwischenplatte können insbesondere zur Drehmomentübertragung drehfest aber axial verschiebbar mit der Gegenplatte verbunden sein. Hierzu können die Anpressplatte und/oder die Zwischenplatte vorzugsweise an einem Bauteil, das beispielsweise fest mit der Gegenplatte und/oder einem Kupplungsdeckel verbunden ist, axial geführt sein. Zwischen der Zwischenplatte und der Gegenplatte, zwischen der Zwischenplatte und der Anpressplatte und/oder zwischen der Zwischenplatte und einer weiteren Zwischenplatte kann jeweils ein Belagring einer Kupplungsscheibe reibschlüssig verpresst werden. Der jeweilige Belagring kann insbesondere einen in radialer Richtung verlaufenden Befestigungssteg aufweisen, der drehfest und gegebenenfalls axial relativ verschiebbar an der Kupplungsscheibe angebunden sein kann. Insbesondere ist an beiden Axialseiten des Befestigungsstegs jeweils mindestens ein Reibbelag vorgesehen. Der jeweilige Reibbelag kann über eine in axialer Richtung nachgiebige Belagfederung mit dem Befestigungsstegs verbunden sein, wobei insbesondere der Befestigungssteg selbst die Belagfederung ausbildet. Der Befestigungssteg kann hierzu einen in Umfangsrichtung betrachteten wellenförmigen Querschnitt aufweisen. Der Befestigungssteg ist insbesondere eine ringförmige Scheibe und/oder weist mehrere in Umfangsrichtung angeordnete Segmente auf.

Insbesondere weist der Kontaktkörper eine zur Rückstellfeder weisende, insbesondere konvex gerundete, Kontaktgeometrie für einen punktförmigen und/oder linienförmigen Kontakt an der Rückstellfeder auf. Verschleißeffekte bei einer sich durch eine Verlagerung der Rückstellfeder bei der Betätigung der Mehrscheibenkupplung ergebenen Relativbewegung zwischen der Rückstellfeder und dem Kontaktkörper können dadurch reduziert werden. Durch einen linienförmigen Kontakt kann im Vergleich zu einem punktförmigen Kontakt die Spannungsbelastung in der Rückstellfeder reduziert sein.

Vorzugsweise weist der Kontaktkörper eine zur Rückstellfeder weisende, insbesondere konvex gerundete, Kontaktgeometrie zur Veränderung einer über die an dem Kontaktkörper angreifenden Rückstellfeder erreichte Wegübersetzung zwischen dem Ringkörper und der Anpressplatte oder der weiteren Zwischenplatte, insbesondere durch Verlagern der wirksamen Kontaktstelle zwischen der Kontaktgeometrie des Kontaktkörpers und der Rückstellfeder, auf. Das Verlagern kann beispielsweise durch ein Abrollen und/oder Abgleiten der Kontaktgeometrie an der Rückstellfeder erfolgen. Diese Verlagerung erfolgt dazu komplett oder zumindest teilweise in Richtung oder parallel zu der gedanklichen Verbindungslinie zwischen der Verbindungsstelle zwischen der Rückstellfeder und der von ihr zentrierten beweglichen Platte und der Verbindungsstelle zwischen der Rückstellfeder und dem relativ zur Kupplung feststehenden Kupplungsbauteil. Wie sich die Abstände zwischen diesen beiden Verbindungsstellen und der wirksamen Kontaktstelle zwischen dem Kontaktkörper und der Rückstellfeder beim Betätigender der Mehrscheibenreibungskupplung verändern, lässt sich durch die Form der Kontaktgeometrie des Kontaktkörpers, insbesondere durch deren Krümmungsverlauf, beeinflussen. Ändert sich das Verhältnis dieser Abstände, ändert sich auch das Übersetzungsverhältnis der über den Kontakt des Kontaktkörpers an der Rückstellfeder erreichten Wegkopplung der Zwischenplatte mit der Anpressplatte beziehungsweise der weiteren Zwischenplatte. Ferner ist es dadurch möglich Geometrieeinflüsse bei der Verlagerung und/oder sich ändernde Elastizitäten und/oder ähnliche das Übersetzungsverhältnis beeinflussende Einwirkungen zu kompensieren, um eine dadurch bedingte Änderung des Übersetzungsverhältnisses zu kompensieren oder zumindest zu reduzieren. Dadurch kann das Schließverhalten und/oder das Öffnungsverhalten der Mehrscheibenreibungskupplung geeignet eingestellt werden.

Besonders bevorzugt weist der Kontaktkörper eine zur Rückstellfeder weisende Kontaktgeometrie zur Anlage an der Rückstellfeder auf, wobei die Kontaktgeometrie mindestens zwei verschiedene Krümmungsradien und/oder einen sich verändernden Krümmungsradius zur Verlagerung eines Kontaktpunkts des Kontaktkörpers an der Rückstellfeder in Abhängigkeit der Relativlage des Ringkörpers zu der mit der Rückstellfeder verbundenen Anpressplatte oder weiteren Zwischenplatte aufweist. Durch den beim Kontakt an der Rückstellfeder wirksamen Konturverlauf des Kontaktkörpers ist es möglich die Wegübersetzung allmählich und/oder sprungartig zu ändern. Kontaktkonturen mit nicht-konstanten Krümmungsradien bieten dabei besonders viele Möglichkeiten die Wegübersetzung zu beeinflussen und auf die Stellung der Kupplung abzustimmen. Dadurch kann das Schließverhalten und/oder das Öffnungsverhalten der Mehrscheibenreibungskupplung in weiten Bereichen geeignet eingestellt werden.

Insbesondere ist eine Befestigungslasche zur Befestigung mit einer, insbesondere als Blattfeder ausgestalteten, Zwischenplattenrückstellfeder vorgesehen, wobei die Kontaktlasche mittelbar über die Befestigungslasche oder die Befestigungslasche mittelbar über die Kontaktlasche mit dem Ringkörper verbunden ist. Die Befestigungslasche kann insbesondere als ein abstehender Ansatz ausgebildet sein. Die Befestigungslasche ist vorzugsweise radial außerhalb oder radial innerhalb des Ringkörpers angeordnet, so dass die Befestigungslasche in einen Bereich angeordnet sein kann, in dem kein reibschlüssiges Verpressen stattfindet. Es ist auch möglich, dass die Befestigungslasche in Umfangsrichtung geschlossen ausgestaltet ist und lediglich als eine radiale Verlängerung des Ringkörpers in einen Bereich ausgestaltet ist, in dem kein reibschlüssiges Verpressen stattfindet. Beispielsweise ist die Befestigungslasche radial außerhalb des Ringkörpers angeordnet. Dadurch ist es nicht erforderlich für die Kontaktlasche einerseits und die Befestigungslasche andererseits separate Laschen vorzusehen. Der Bauraumbedarf in Umfangsrichtung kann dadurch reduziert werden, wodurch Platz für andere Bauteilkomponenten der Reibungskupplung geschaffen werden kann.

Vorzugsweise ist der Kontaktkörper auf dem vollen Umfang des Kontaktkörpers mit unverformtem Material der Kontaktlasche verbunden. Dadurch ergibt sich eine besonders stabile Anbindung des Kontaktkörpers an dem Material der übrigen Kontaktlasche, wodurch eine hohe Bauteilfestigkeit für die Zwischenplatte erreicht ist. Der Kontaktkörper kann hierbei vergleichbar zur Herstellung von Nietwarzen ausgebildet werden.

Besonders bevorzugt ist der Kontaktkörper nur radial innen oder nur radial innen und in tangentialer Richtung mit unverformtem Material der Kontaktlasche verbunden. Dadurch ergibt sich eine hinreichend stabile Anbindung des Kontaktkörpers an dem Material der übrigen Kontaktlasche, wodurch eine hohe Bauteilfestigkeit für die Zwischenplatte erreicht ist. Gleichzeitig kann der radiale Bauraumbedarf der Zwischenplatte im Bereich der Kontaktlasche minimiert werden.

Insbesondere ist der Kontaktkörper durch axiales Versetzen und/oder Umbiegen eines Teils der Kontaktlasche ausgebildet. Der Kontaktkörper kann dadurch mit Hilfe einfach umzusetzender Umformschritte ausgebildet werden. Insbesondere ist es möglich den Kontaktkörper gleichzeitig mit anderen Konturierungen der Zwischenplatte auszuformen, so dass die Herstellung der Zwischenplatte schnell und kostengünstig erfolgen kann.

Vorzugsweise ist der Kontaktkörper in radialer Richtung betrachtet von dem Ringkörper zu einem Großteil, insbesondere vollständig verdeckt. Dadurch kann der Bauraumbedarf der Zwischenplatte in axialer Richtung gering gehalten werden. Hierbei wird die Erkenntnis ausgenutzt, dass es möglich ist die Rückstellfeder derart mit der Gegenplatte zu verbinden, dass die Rückstellfeder in den axialen Bereich der Zwischenplatte zumindest hineinragt.

Die Erfindung betrifft ferner ein Verfahren zur Herstellung einer Zwischenplatte, die wie vorstehend beschrieben aus- und weitergebildet sein kann, bei dem in einem Herstellschritt der Kontaktkörper durch eine plastische Verformung ausgeformt wird und nachfolgend in einem Kalibrierschritt zur Einstellung einer genaue Relativlage des Ringkörpers der Zwischenplatte zur Rückstellfeder eine zur Rückstellfeder weisende Kontaktgeometrie des Kontaktkörpers durch einen spanlosen Bearbeitungsschritt und/oder einen spanenden Bearbeitungsschritt bearbeitet wird. Durch den durch eine plastische Verformung der Kontaktlasche ausgebildeten Kontaktkörper ist mit Hilfe der durch den Ringkörper bereitgestellten zusätzlichen Reibflächen eine Übertragung eines besonders hohen Drehmoments bei unterschiedlichen Bauformen eines Antriebsstrangs eines Kraftfahrzeugs mit Hilfe einer Reibungskupplung ermöglicht. Hierbei kann zunächst eine grobe Ausformung des Kontaktkörpers erfolgen, während die genauere Ausformung erst später erfolgt. Dadurch können insbesondere weitere Toleranzen der Mehrscheibenkupplung ausgeglichen werden.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: eine schematische Schnittdarstellung einer Mehrscheibendoppelkupplung,
Fig.2: eine schematische perspektivische Ansicht einer Teils der Mehrscheibendoppelkupplung aus Fig. 1,
Fig. 3a: eine schematische perspektivische Ansicht eines Teils einer ersten Ausführungsform einer Zwischenplatte für die Mehrscheibendoppelkupplung aus Fig. 1,
Fig. 3b: eine schematische Schnittansicht der Zwischenplatte aus Fig. 3a,
Fig. 4a: eine schematische perspektivische Ansicht eines Teils einer zweiten Ausführungsform einer Zwischenplatte für die Mehrscheibendoppelkupplung aus Fig. 1,
Fig. 4b: eine schematische Schnittansicht der Zwischenplatte aus Fig. 4a,
Fig. 5: eine schematische perspektivische Ansicht eines Teils einer dritten Ausführungsform einer Zwischenplatte für die Mehrscheibendoppelkupplung aus Fig. 1,
Fig. 6: eine schematische perspektivische Ansicht eines Teils einer vierten Ausführungsform einer Zwischenplatte für die Mehrscheibendoppelkupplung aus Fig. 1,
Fig. 7: eine schematische perspektivische Ansicht eines Teils einer fünften Ausführungsform einer Zwischenplatte für die Mehrscheibendoppelkupplung aus Fig. 1,
Fig. 8a: eine schematische Schnittansicht der Zwischenplatte aus Fig. 3 nach einem ersten Herstellungsschritt,
Fig. 8b: eine schematische Schnittansicht der Zwischenplatte aus Fig. 8a nach einem zweiten Herstellungsschritt,

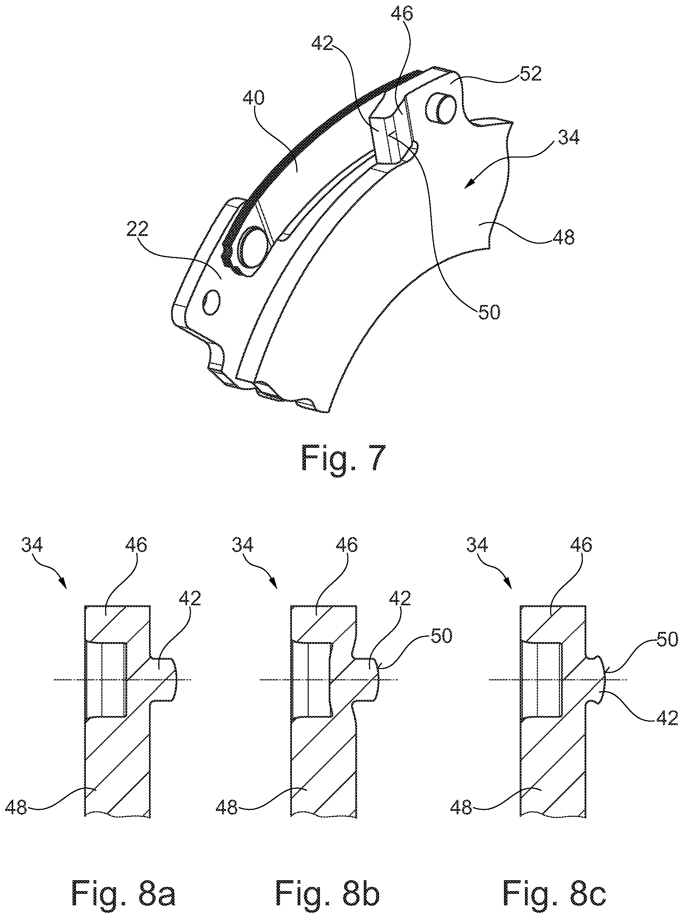

Fig. 8b: eine schematische Schnittansicht der Zwischenplatte aus Fig. 8a nach einem alternativen zweiten Herstellungsschritt,

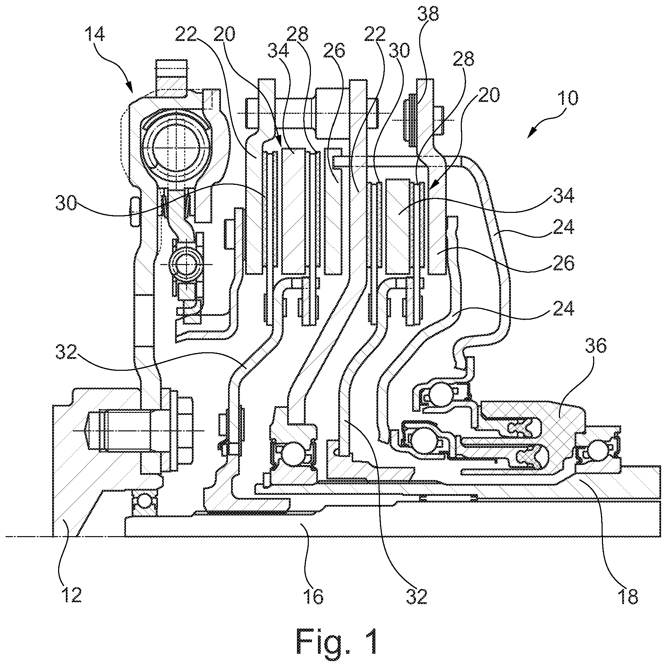

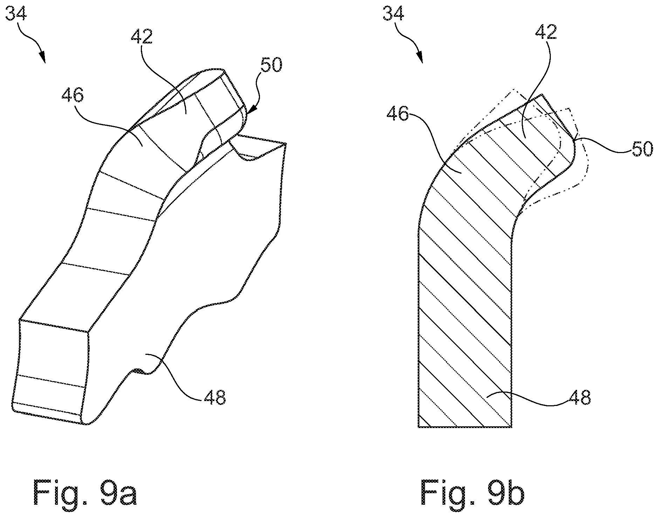

Fig. 9a: eine schematische perspektivische Ansicht eines Teils einer sechsten Ausführungsform einer Zwischenplatte für die Mehrscheibendoppelkupplung aus Fig. 1 und
Fig. 9b: eine schematische Schnittansicht der Zwischenplatte aus Fig. 9a.

Die in Fig. 1 dargestellte Mehrscheibendoppelkupplung 10 kann eine Antriebswelle 12 über einen als Zweimassenschwungrad ausgestalteten Drehschwingungsdämpfer 14 mit einer ersten Getriebeeingangswelle 16 und einer zweiten Getriebeeingangswelle 18 kuppeln. Hierzu ist jeweils eine Mehrscheibenkupplung 20 vorgesehen, die jeweils eine mit der Antriebswelle 12 gekoppelte Gegenplatte 22 und eine mit Hilfe eines als starrer Betätigungstopf ausgestalteten Betätigungselement 24 verlagerbare Anpressplatte 26 aufweist, wobei die Anpressplatte 26 auch eine zwischen einem ersten Belagring 28 und einem relativ zum ersten Belagring 28 axial verschiebbaren zweiten Belagring 30 einer Kupplungsscheibe 32 angeordnete Zwischenplatte 34 verpressen kann. Hierzu kann von einem hydraulischen Betätigungssystem 36 eine Betätigungskraft, insbesondere zum Schließen der Mehrscheibenkupplung 20, in das Betätigungselement 24 eingeleitet werden. Die Anpressplatte 26 ist über eine als erste Blattfeder 38 ausgestaltete Rückstellfeder und die Zwischenplatte 34 über eine als zweite Blattfeder 40 ausgestaltete Rückstellfeder zumindest mittelbar mit der Gegenplatte 22 verbunden. Mit der Zwischenplatte 34 ist ein die erste Blattfeder 38 kontaktierender Kontaktkörper 42 verbunden, wodurch ein Koppelmechanismus 44 ausgebildet wird, der die Zwischenplatte 34 mit der Anpressplatte 26 in einem definierten Wegübersetzungsverhältnis bewegungskoppelt.

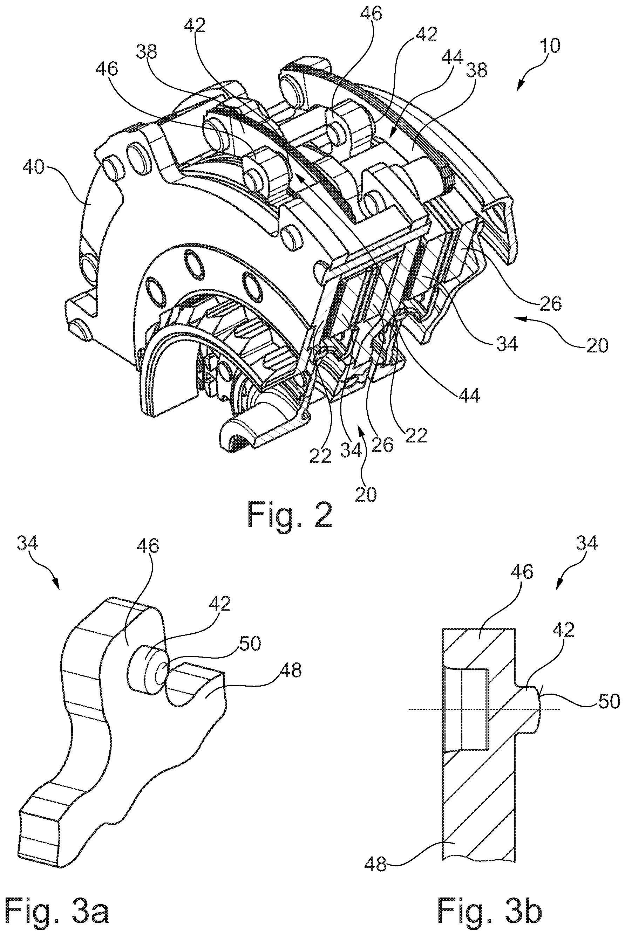

Wie die Fig. 2 zeigt, sind bei der Mehrscheibendoppelkupplung 10 die Zwischenplatten 34 und die Anpressplatten 26 über die ersten Blattfedern 38 und die zweiten Blattfedern 40 mit den relativ zur Kupplung 20 feststehenden Teilen verbunden. Die Blattfedern 38, 40 dienen zur Zentrierung der Platten 26, 34 und zur Drehmomentübertragung. Gleichzeitig sind die Blattfedern 38, 40 in axialer Richtung elastisch und ermöglichen so eine geführte axiale Verlagerung der Zwischen- und Anpressplatten 26, 34. Beide Platten26, 34 weisen mehrere auf dem Umfang verteilte Blattfedern 38, 40 oder Blattfederpakete auf. Um die Zwischenplattenbewegung im richtigen Verhältnis mit der Anpressplattenbewegung zu synchronisieren, stützt sich die Zwischenplatte 34 auf einer oder mehreren ersten Blattfedern 38 der Anpressplatte 26 ab.

Das erste Ausführungsbeispiel ist in den Fig. 2, 3a und 3b dargestellt. Bei dem in 3D-Ansicht gezeigten Sektor einer Doppelkupplung 10 (Fig. 2), ist erkennbar, dass die Zwischenplatten 34 radial außen Kontaktlaschen 46 aufweisen, die hauptsächlich in radialer Richtung von einem Ringkörper 48 abstehen und den Kontaktkörper 42 und seine Kontaktgeometrie 50 ausbilden, über den sich die Zwischenplatte 34 axial auf den ersten Blattfedern 38 abstützen. Die Gestaltung der Kontaktlasche 46 und die Form der von der Kontaktgeometrie 50 definierten Abstützstelle kann auf unterschiedliche Weise erfolgen. Bei diesem Ausführungsbeispiel ist Material aus dem Mittelteil der Kontaktlasche 46 axial verschoben und dadurch ein zapfenartiger Kontaktkörper 42 mit einer gewölbten Stirnseite im Bereich der Kontaktgeometrie 50 ausgeformt. Dieses Herstellungsverfahren ist bereits aus der Herstellung von Nietwarzen bekannt. Die gewölbte Stirnseite des Kontaktkörpers 42 wird bei diesem Ausführungsbeispiel als Kontaktgeometrie 50 verwendet. Da der Kontaktkörper 42 entsteht, indem Material aus einem Zwischenplattenblech für die Zwischenplatte 24 in eine Matrize gepresst wird und dabei die Form der Matrizenaussparung annimmt, können mit unterschiedlichen Matrizen auch leicht unterschiedlich geformte Kontaktkörper 42 erzeugen werden. Statt einfacher gewölbter Flächen, wie der hier abgebildete Kugelabschnittsfläche lassen sich daher auch aufwendige Konturen mit unterschiedlichen Krümmungsradien erzeugen. Mit solchen komplizierteren Kontaktgeometrien 50 lassen sich der Zwischenplattenweg und der Anpressplattenweg besonders gut aufeinander abstimmen und es lässt sich sogar das Verhältnis der beiden Wege von der Zwischenplatte und der Anpressplatte über die Schwenkwinkel der ersten Blattfedern 38 in einer gewünschten Weise verändern.

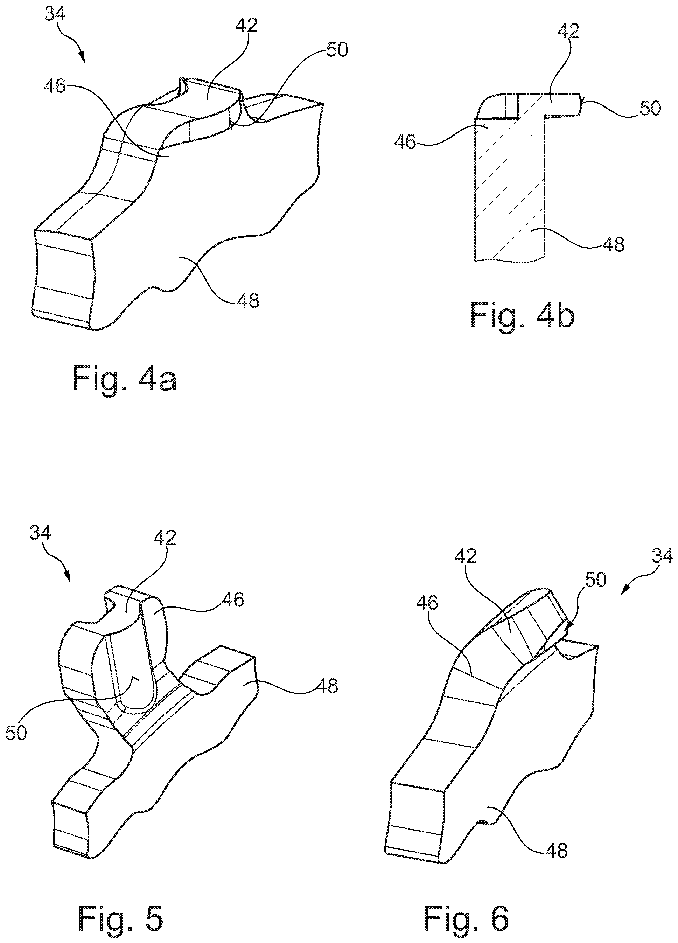

Die Fig. 4a und 4b stellen ein weiteres Ausführungsbeispiel vor. Die beiden Figuren zeigen eine Kontaktlasche 46 in perspektivischer Detailansicht und in Schnittdarstellung. Durch axiales plastisches Versetzen des Materials im Randbereich der Zwischenplatte 34 (hier am Randbereich der Kontaktlasche 46 dargestellt), können Kontaktkörper 42 mit Kontaktgeometrie 50 hergestellt werden. Die Kontaktgeometrie 50 kann in ähnlicher Weise und mit ähnlichen Eigenschaften ausgeführt werden, wie beim vorherigen Beispiel. In radialer und in tangentialer Richtung ist die Kontaktfläche der Kontaktgeometrie 50 unterschiedlich stark gekrümmt, sie kann aber auch gleich stark gekrümmt sein oder nur in einer Richtung eine Krümmung oder einen Konturverlauf aufweisen. Wenn das Material der Zwischenplatte 34 partiell axial versetzt wird, ist es aus Sicht der Bauteilfestigkeit besonders sinnvoll, das versetzte Material auf dem vollen Umfang am das Grundmaterial angebunden zu lassen (Ausführungsbeispiel 1) oder durch die Gestaltung des Kontaktkörpers 42 dafür zu sorgen, dass der Bereich der höchsten Materialverformung noch von weniger stark verformtem Material unterstützt und im Idealfall beidseitig flankiert wird (Ausführungsbeispiel 2).

Die Fig. 5 zeigt eine Kontaktlasche 46 der Zwischenplatte 34, deren Kontaktgeometrie 50 nur in einer Richtung gekrümmt ist. Durch die alleinige Krümmung in tangentialer Richtung der Kupplung entsteht an der Abstützstelle zur ersten Blattfeder 38 ein Linienkontakt. Eine Linienberührung zwischen der Zwischenplatte 34 und den ersten Blattfedern 38 ist verschleißärmer als ein Punktkontakt und reduziert die Spannungsbelastung der ersten Blattfedern 38. Außerdem zeigt dieses Ausführungsbeispiel, dass die Kontaktgeometrie 50 der Zwischenplatten 34 nicht immer axial über die Reibflächenebenen der Zwischenplatten 34 hinausragen muss. Wenn die Kontaktlaschen 46 oder die Kontaktkörper 42 gegenüber dem Ringkörper 48 der Zwischenplatte 34 gebogen oder versetzt sind, kann die Kontaktgeometrie 50 der Abstützstelle auch radial über dem Ringkörper 48 der Zwischenplatten 34 angeordnet sein.

Eine weitere sehr einfache Ausgestaltungsform der Abstützgeometrie zeigt die Fig. 6. Wird die Zwischenplatte 34 mit radialen Kontaktlaschen 46 aus einer ebenen Platine ausgestanzt und die Kontaktlaschen sind sehr schmal oder verjüngen sich radial nach außen, so entsteht durch einfaches axiales Umbiegen der Kontaktlaschen 46 spitze axialwirkende Abstützstellen. Wie in der Figur gezeigt, können diese Abstützstellen durch einen nachfolgenden Bearbeitungsschritt, wie beispielsweise Anprägen, Nachkalibrieren oder Schleifen, mit einer definierten gekrümmten Kontaktgeometrie 50 versehen werden.

Die Abstützstellen der Zwischenplatten 34 müssen nicht immer aus separaten Kontaktlaschen 46 am Außendurchmesser der Zwischenplatte 34 ausgeformt werden. Die Fig. 4a deutet bereits an, dass die axial abstehenden Kontaktkörper 42 mit der Kontaktgeometrie 50 auch direkt am Außenbereich des Ringkörpers 48 der Zwischenplatte 34 angeformt sein können. Eine andere Variante ohne separate Kontaktlaschen 46, die nur für die axiale Abstützung genutzt werden, zeigt die Fig. 7. Die Kontaktkörper 42 mit der Abstützgeometrie 50 können auch aus ohnehin vorhandenen Befestigungslaschen 52 für die zweiten Blattfedern 40 ausgeformt werden. Bei dem Ausführungsbeispiel wurde ein in tangentialer Richtung neben der Blattfederanbindeposition (Vernietungsstelle) befindlicher Bereich der Befestigungslasche 52 axial verbogen, der die Kontaktlasche 46 mit einer durch die Kontaktgeometrie 50 des Kontaktkörpers 42 ausgebildete Auflagekante (Auflagewölbung) für die ersten Blattfedern 38 der Anpressplatte 26 ausformt. Alternativ lassen sich auf den Befestigungslaschen 52 aber auch alle zuvor für die Kontaktlasche 46 gezeigten Varianten anwenden, die einen axialen Kontaktkörper 42 mit Kontaktgeometrie 50 erzeugen, so dass die Befestigungslasche 52 und die Kontaktlasche 46 in einem gemeinsamen Bauteil zusammenfallen können.

Für die Funktion der Kupplung 20 ist die Form und die Lage der Kontaktstellen wichtig. Um die Form und die Lage sehr genau herstellen zu können, kann es sinnvoll sein, das Material der Zwischenplatte 34 nicht gleich auf die finale Zielposition zu verformen, sondern das Material in einem ersten Plastifizierungsprozess in eine Position und Form zu bringen, die der Zielposition nahe kommt und dann anschließend in einem zweiten idealer Weise exakteren Herstellungsprozess die finale Form und Position der Kontaktstelle auszubilden. Dabei kann es auch zweckmäßig sein das Material im ersten Herstellungsprozess über die finale Position hinaus zu verformen und dann im zweiten Herstellungsprozess (oder zweiten Fertigungsschritt) das Material wieder auf die Zielposition zurück zu verformen oder Material bis auf die Zielkontur abzutragen. Um bei dem zweiten Herstellungsprozess die Zielkontur so genau wie möglich zu erreichen, können insbesondere spanlose Verfahren wie Zurückstauchen, Prägen und Kalibrieren zum Einsatz kommen oder spanabhebende Fertigungsverfahren wie Fräsen, Drehen, Bohren oder Schleifen.

Der Fertigungsprozess mit zwei Herstellungsschritten oder Herstellungsprozessen ist in den Fig. 8 und 9 veranschaulicht. Die Fig. 8a zeigt den aus dem ersten Ausführungsbeispiel (Fig. 3b) bekannten zapfenartigen Kontaktkörper 42 nach dem ersten Fertigungsschritt. Der erste Fertigungsschritt formt die Grundform des Kontaktkörpers 42 aus. Die exakte Höhe kann in einem zweiten Fertigungsschritt durch zurückdrücken (Fig. 8b) oder weiterdrücken genau justiert werden. Die Fig. 8c zeigt eine weitere Variante, wie durch Anprägen des Kontaktkörpers 42 die gewünschte axiale Höhe in einem zweiten Fertigungsschritt exakt eingestellt wird. Da beim Anprägen die Kontur des Prägewerkzeugs auf die Stirnseite des Kontaktkörpers 42 übertragen wird, lässt sich beim Anprägen nicht nur die Höhe der Kontaktgeometrie 50 verändern, sondern man kann dabei auch die Position der wirksamen Kontaktgeometrie 50 etwas variieren, indem man beispielsweise beim Prägeprozess die Ausrichtung zwischen der Zwischenplatte 34 und dem Prägewerkzeug in tangentialer Richtung verändert. Durch den Austausch des Prägewerkzeuges lässt sich auch der Konturverlauf der Abstützstelle verändern.

Der zweite Fertigungsschritt kann auch kurz bevor die Zwischenplatte 34 in die Kupplung 20 montiert wird, während oder nach der Montage erfolgen. Wenn der zweite Fertigungsschritt durchgeführt wird, wenn schon bekannt ist, mit welchen Bauteilen die Zwischenplatte 34 in der Kupplung 20 zusammenwirkt, kann die Zielposition, in die die Kontaktflächen der Zwischenplatten 34 gebracht werden, individuell an die jeweilige Kupplung 20 angepasst werden. Dadurch können durch den zweiten Fertigungsschritt nicht nur die Toleranzen des ersten Fertigungsschrittes ausgeglichen werden, sondern auch die Folgen vieler weiterer Bauteiltoleranzen von anderen Kupplungsbauteilen.

Die Fig. 9a und 9b zeigen, dass die Lage der Kontaktgeometrie 50 nicht nur durch eine Plastifizierung oder einen Materialabtrag in unmittelbarer Nähe der Kontaktstelle verändert werden kann. Wird die ganze Kontaktlasche 46 verbogen oder relativ zur den Zwischenplattenreibstellen durchgestellt oder axial versetzt, verschiebt sich ebenfalls die Lage der Kontaktgeometrie 50, so dass dies ebenfalls zum Justieren der Kontaktgeometrie 50 und anderer Kupplungstoleranzen verwendet werden kann.

Um den Verschleiß an der Kontaktstelle zu minimieren, kann die Kontaktgeometrie 50 auch gehärtet, vergütet oder beschichtet werden. Außerdem kann eine Beschichtung eingesetzt werden, um die Reibung zwischen der Kontaktstelle der Zwischenplatte 34 und der ersten Blattfeder 38 zu reduzieren, wodurch sich die Hysterese der Kupplung 20 reduziert. Das Härten, Vergüten und/oder Beschichten der Kontaktgeometrie 50 kann vor, während oder nach der Montage der Zwischenplatte 34 erfolgen. Ebenso kann das Härten, Vergüten und/oder Beschichten auch vor, während oder nach dem Justieren, Richten oder Einstellen der Kontaktstellen erfolgen.

Führungsmechanismen, bei dem sich die Zwischenplatten 34 auf den ersten Blattfedern 38 der Anpressplatten 26 abstützen, werden wie anfangs beschrieben wegen ihrer geringen Reibung hauptsächlich in trockenen Kupplungen eingesetzt. Alle hier vorgestellten Ausführungsformen und Konzepte lassen sich aber auch in nasslaufenden Kupplungen anwenden.

In Sinne des hier beschriebenen Koppelmechanismus 44, stellen die ersten Blattfedern 38 einfach ein Element dar, das auf der einen Seite der Anpressplattenbewegung folgt, auf der anderen Seite relativ zur Kupplung axial feststehend angebunden ist und in dessen Mittelbereich sich durch eine mechanische Verbindung der richtige Weg für die Zwischenplatte 34 abgreifen lässt. Diese Funktion kann natürlich auch durch andere nicht als Blattfeder ausgestaltete Bauteile erfüllt werden, z.B. durch einen Hebel. Alle hier vorgestellten Varianten, die eine oder mehrere Abstützkonturen an der Zwischenplatte 34 ermöglichen, können die Zwischenplatte 34 natürlich auch auf anderen nicht als Blattfedern ausgestalteten Bauteilen abstützen.

### Bezugszeichenliste

- 10: Doppelkupplung
- 12: Antriebswelle
- 14: Drehschwingungsdämpfer
- 16: erste Getriebeeingangswelle
- 18: zweite Getriebeeingangswelle
- 20: Mehrscheibenkupplung
- 22: Gegenplatte
- 24: Betätigungselement
- 26: Anpressplatte
- 28: erster Belagring
- 30: zweiter Belagring
- 32: Kupplungsscheibe
- 34: Zwischenplatte
- 36: Betätigungssystem
- 38: erste Blattfeder
- 40: zweite Blattfeder
- 42: Kontaktkörper
- 44: Koppelmechanismus
- 46: Kontaktlasche
- 48: Ringkörper
- 50: Kontaktgeometrie
- 52: Befestigungslasche

## Patentansprüche

1. Zwischenplatte für eine Mehrscheibenkupplung (20), insbesondere Zweischeibenkupplung, zum Kuppeln einer Antriebswelle (12) eines Kraftfahrzeugmotors mit mindestens einer Getriebeeingangswelle (16, 18) eines Kraftfahrzeuggetriebes, insbesondere für eine Doppelkupplung (10), mit
einem Ringkörper (48) zum reibschlüssigen Verpressen zwischen einer mit der Antriebswelle (12) koppelbaren Gegenplatte (22) und einer relativ zur Gegenplatte (22) axial verlagerbaren Anpressplatte (26) **dadurch gekennzeichnet, dass** eine einstückig mit dem Ringkörper (48) ausgebildete Kontaktlasche (46) zur wegübersetzten Koppelung des Ringkörpers (48) mit der Anpressplatte (26), vorgesehen ist,
wobei die Kontaktlasche (46) einen durch eine plastische Verformung eines Teils der Kontaktlasche (46) ausgebildeten in axialer Richtung abstehenden Kontaktkörper (42) zum axialen Anschlagen an einer mit einer in axialer Richtung zur Zwischenplatte (34) nachfolgenden Anpressplatte (26) oder weiteren Zwischenplatte verbundenen, insbesondere als Blattfeder ausgestalteten, Rückstellfeder (38) aufweist.

2. Zwischenplatte nach Anspruch 1 **dadurch gekennzeichnet, dass** der Kontaktkörper (42) eine zur Rückstellfeder (38) weisende, insbesondere konvex gerundete, Kontaktgeometrie (50) für einen punktförmigen und/oder linienförmigen Kontakt an der Rückstellfeder (38) aufweist.

3. Zwischenplatte nach Anspruch 1 oder 2 **dadurch gekennzeichnet, dass** der Kontaktkörper (42) eine zur Rückstellfeder (38) weisende, insbesondere konvex gerundete, Kontaktgeometrie (50) zur Veränderung einer über die an dem Kontaktkörper (42) angreifenden Rückstellfeder (38) erreichte Wegübersetzung zwischen dem Ringkörper (48) und der Anpressplatte (26) oder der weiteren Zwischenplatte, insbesondere durch Verlagern der wirksamen Kontaktstelle zwischen der Kontaktgeometrie (50) des Kontaktkörpers (42) und der Rückstellfeder (38), aufweist.

4. Zwischenplatte nach einem der Ansprüche 1 bis 3 **dadurch gekennzeichnet, dass** der Kontaktkörper (42) eine zur Rückstellfeder (38) weisende Kontaktgeometrie (50) zur Anlage an der Rückstellfeder (38) aufweist, wobei die Kontaktgeometrie (50) mindestens zwei verschiedene Krümmungsradien und/oder einen sich verändernden Krümmungsradius zur Verlagerung eines Kontaktpunkts des Kontaktkörpers (42) an der Rückstellfeder (38) in Abhängigkeit der Relativlage des Ringkörpers (48) zu der mit der Rückstellfeder (38) verbundenen Anpressplatte (26) oder weiteren Zwischenplatte aufweist.

5. Zwischenplatte nach einem der Ansprüche 1 bis 4 **dadurch gekennzeichnet, dass** eine Befestigungslasche (52) zur Befestigung mit einer, insbesondere als Blattfeder (40) ausgestalteten, Zwischenplattenrückstellfeder vorgesehen ist, wobei die Kontaktlasche (46) mittelbar über die Befestigungslasche (52) oder die Befestigungslasche (52) mittelbar über die Kontaktlasche (46) mit dem Ringkörper (48) verbunden ist.

6. Zwischenplatte nach einem der Ansprüche 1 bis 5 **dadurch gekennzeichnet, dass** der Kontaktkörper (42) auf dem vollen Umfang des Kontaktkörpers (42) mit unverformtem Material der Kontaktlasche (46) verbunden ist.

7. Zwischenplatte nach einem der Ansprüche 1 bis 6 **dadurch gekennzeichnet, dass** der Kontaktkörper (42) nur radial innen oder nur radial innen und in tangentialer Richtung mit unverformtem Material der Kontaktlasche (46) verbunden ist.

8. Zwischenplatte nach einem der Ansprüche 1 bis 7 **dadurch gekennzeichnet, dass** der Kontaktkörper (42) durch axiales Versetzen und/oder Umbiegen eines Teils der Kontaktlasche (46) ausgebildet ist.

9. Zwischenplatte nach einem der Ansprüche 1 bis 8 **dadurch gekennzeichnet, dass** der Kontaktkörper (42) in radialer Richtung betrachtet von dem Ringkörper (48) zu einem Großteil, insbesondere vollständig verdeckt ist.

10. Verfahren zur Herstellung einer Zwischenplatte (34) nach einem der Ansprüche 1 bis 9, bei dem
in einem Herstellschritt der Kontaktkörper (42) durch eine plastische Verformung ausgeformt wird und
nachfolgend in einem Kalibrierschritt zur Einstellung einer genaue Relativlage des Ringkörpers (48) der Zwischenplatte (34) zur Rückstellfeder (38) eine zur Rückstellfeder (38) weisende Kontaktgeometrie (50) des Kontaktkörpers (42) durch einen spanlosen Bearbeitungsschritt und/oder einen spanenden Bearbeitungsschritt bearbeitet wird.

## Claims

1. Intermediate plate for a multiple-disc clutch (20), in particular two-disc clutch, for coupling a drive shaft (12) of a motor vehicle engine to at least one gear mechanism input shaft (16, 18) of a motor vehicle gear mechanism, in particular for a double clutch (10), having
an annular body (48) for pressing with frictionally locking action between a counter-plate (22) which is able to be coupled to the drive shaft (12) and a pressure plate (26) which is axially displaceable relative to the counter-plate (22), **characterized in that** provision is made of a contact link (46) which is formed in one piece with the annular body (48) and which serves for travel-transmitted coupling of the annular body (48) to the pressure plate (26),
wherein the contact link (46) has a contact body (42), formed by plastic deformation of a part of the contact link (46) and protruding in an axial direction, for axial abutment against a restoring spring (38), which restoring spring is connected to a pressure plate (26) which follows in an axial direction in relation to the intermediate plate (34), or to a further intermediate plate, and which is designed in particular as a leaf spring.

2. Intermediate plate according to Claim 1, **characterized in that** the contact body (42) has a contact geometry (50), facing the restoring spring (38) and which is in particular convexly rounded, for punctiform and/or linear contact against the restoring spring (38).

3. Intermediate plate according to Claim 1 or 2, **characterized in that** the contact body (42) has a contact geometry (50), facing the restoring spring (38) and which is in particular convexly rounded, for varying a travel transmission, attained via the restoring spring (38) engaging on the contact body (42), between the annular body (48) and the pressure plate (26) or the further intermediate plate, in particular by displacement of the active point of contact between the contact geometry (50) of the contact body (42) and the restoring spring (38).

4. Intermediate plate according to one of Claims 1 to 3, **characterized in that** the contact body (42) has a contact geometry (50), facing the restoring spring (38), for abutment against the restoring spring (38), wherein the contact geometry (50) has at least two different radii of curvature and/or a variable radius of curvature for displacement of a point of contact of the contact body (42) against the restoring spring (38) in a manner dependent on the relative position of the annular body (48) in relation to the pressure plate (26) connected to the restoring spring (38), or to the further intermediate plate.

5. Intermediate plate according to one of Claims 1 to 4, **characterized in that** provision is made of a fastening link (52) for fastening to an intermediate-plate restoring spring, which is designed in particular as a leaf spring (40), wherein the contact link (46) is connected indirectly via the fastening link (52), or the fastening link (52) is connected indirectly via the contact link (46), to the annular body (48).

6. Intermediate plate according to one of Claims 1 to 5, **characterized in that** the contact body (42) is connected over the full circumference of the contact body (42) to non-deformed material of the contact link (46).

7. Intermediate plate according to one of Claims 1 to 6, **characterized in that** the contact body (42) is connected to non-deformed material of the contact link (46) only radially at the inside or only radially at the inside and in a tangential direction.

8. Intermediate plate according to one of Claims 1 to 7, **characterized in that** the contact body (42) is formed by axial displacement and/or bending of a part of the contact link (46).

9. Intermediate plate according to one of Claims 1 to 8, **characterized in that** the contact body (42), as seen in a radial direction, is concealed to a large extent, in particular completely, by the annular body (48).

10. Method for the production of an intermediate plate (34) according to one of Claims 1 to 9, in which, in a production step, the contact body (42) is formed by plastic deformation, and
subsequently, in a calibration step, for setting an accurate relative position of the annular body (48) of the intermediate plate (34) in relation to the restoring spring (38), a contact geometry (50), facing the restoring spring (38), of the contact body (42) is machined by way of a machining step without cutting and/or a machining step with cutting.

## Revendications

1. Plaque intermédiaire pour un embrayage multidisque (20), notamment embrayage à deux disques, destiné à accoupler un arbre d'entraînement (12) d'un moteur de véhicule automobile avec au moins un arbre d'entrée de boîte de vitesses (16, 18) d'une boîte de vitesses de véhicule automobile, notamment pour un double embrayage (10) comprenant
un corps annulaire (48) destiné à être comprimé avec liaison par friction entre une contre-plaque (22) qui peut être accouplée à l'arbre d'entraînement (12) et une plaque de pressage (26) qui peut être déplacée dans le sens axial par rapport à la contre-plaque (22),
**caractérisée en ce que**
une patte de contact (46), réalisée d'un seul tenant avec le corps annulaire (48), est présente pour l'accouplement avec transmission de course du corps annulaire (48) avec la plaque de pressage (26),
la patte de contact (46) possédant un corps de contact (42), formé par une déformation plastique d'une partie de la patte de contact (46) et faisant saillie dans la direction axiale, destiné à venir en butée axiale contre un ressort de rappel (38), notamment configuré comme un ressort à lames, relié à une plaque de pressage (26) qui suit la plaque intermédiaire (34) dans la direction axiale ou à une plaque intermédiaire supplémentaire.

2. Plaque intermédiaire selon la revendication 1, **caractérisée en ce que** le corps de contact (42) possède une géométrie de contact (50) orientée vers le ressort de rappel (38), notamment arrondie de manière convexe, pour un contact ponctuel et/ou linéaire contre le ressort de rappel (38).

3. Plaque intermédiaire selon la revendication 1 ou 2, **caractérisée en ce que** le corps de contact (42) possède une géométrie de contact (50) orientée vers le ressort de rappel (38), notamment arrondie de manière convexe, destinée à modifier une transmission de course, atteinte par le biais du ressort de rappel (38) qui vient en prise contre le corps de contact (42), entre le corps annulaire (48) et la plaque de pressage (26) ou la plaque intermédiaire supplémentaire, notamment par un changement de place du point de contact efficace entre la géométrie de contact (50) du corps de contact (42) et le ressort de rappel (38).

4. Plaque intermédiaire selon l'une des revendications 1 à 3, **caractérisée en ce que** le corps de contact (42) possède une géométrie de contact (50) orientée vers le ressort de rappel (38) destinée à venir en appui contre le ressort de rappel (38), la géométrie de contact (50) possédant au moins deux rayons de courbure différents et/ou un rayon de courbure qui varie pour le changement de place d'un point de contact du corps de contact (42) contre le ressort de rappel (38) en fonction de la position relative du corps annulaire (48) par rapport à la plaque de pressage (26) ou la plaque intermédiaire supplémentaire reliée au ressort de rappel (38).

5. Plaque intermédiaire selon l'une des revendications 1 à 4, **caractérisée en ce qu'**une patte de fixation (52) destinée à la fixation avec un ressort de rappel de plaque intermédiaire, notamment configuré comme un ressort à lames (40), est présente, la patte de contact (46) étant reliée au corps annulaire (48) indirectement par le biais de la patte de fixation (52) ou la patte de fixation (52) étant reliée à celui-ci indirectement par le biais de la patte de contact (46).

6. Plaque intermédiaire selon l'une des revendications 1 à 5, **caractérisée en ce que** le corps de contact (42) est relié avec du matériau non déformé de la patte de contact (46) sur tout le pourtour du corps de contact (42).

7. Plaque intermédiaire selon l'une des revendications 1 à 6, **caractérisée en ce que** le corps de contact (42) n'est relié avec du matériau non déformé de la patte de contact (46) que dans le sens radial vers l'intérieur ou dans le sens radial vers l'intérieur et dans la direction tangentielle.

8. Plaque intermédiaire selon l'une des revendications 1 à 7, **caractérisée en ce que** le corps de contact (42) est réalisé par un décalage axial et/ou un cintrage d'une partie de la patte de contact (46).

9. Plaque intermédiaire selon l'une des revendications 1 à 8, **caractérisée en ce que** le corps de contact (42), vu dans la direction radiale, est recouvert en grande partie, notamment entièrement, par le corps annulaire (48).

10. Procédé de fabrication d'une plaque intermédiaire (34) selon l'une des revendications 1 à 9, selon lequel
le corps de contact (42) est façonné par une déformation plastique dans une étape de fabrication et
ensuite, dans une étape d'étalonnage servant à régler une position relative précise du corps annulaire (48) de la plaque intermédiaire (34) par rapport au ressort de rappel (38), une géométrie de contact (50), orientée vers le ressort de rappel (38), du corps de contact (42) est usinée par une étape d'usinage sans enlèvement de copeaux et/ou une étape d'usinage avec enlèvement de copeaux.
